# EUROPEAN PATENT SPECIFICATION

(11) **EP 3 119 581 B1**
(45) Date of publication and mention of the grant of the patent: **30.12.2020**
(21) Application number: 15718598.4
(22) Date of filing: 16.03.2015
(51) Int. Cl.: B29C 49/42, B29C 49/06

(54) **GRIPPING DEVICE FOR ENGAGING PREFORMS**
GREIFVORRICHTUNG ZUM EINRASTEN VON VORFORMEN
DISPOSITIF DE PRÉHENSION POUR INTRODUCTION DE PRÉFORMES

(30) Priority: 17.03.2014 IT RM20140136
(43) Date of publication of application: 25.01.2017
(73) Proprietor: S.I.P.A. Società Industrializzazione Progettazione e Automazione S.p.A., 31029 Vittorio Veneto (IT)
(72) Inventor: EUSEBIONE, Ernesto, I-31010 Mareno Di Piave (IT); VARDIERO, Damiano, I-30033 Noale (IT); ZOPPAS, Matteo, I-31015 Conegliano (IT); ZOPPAS, Enrico, I-31015 Conegliano (IT)
(74) Representative: Celona, Antonio
(86) International application number: PCT/IB2015/051902
(87) International publication number: WO 2015/140689

(56) References cited:
- DE-A1-102007 033 621
- DE-U1-202012 004 015
- US-A1- 2004 047 940
- US-A1- 2005 092 892
- US-A1- 2010 314 348

## Description

### Field of the invention

The present invention relates to a chuck, i.e., a gripping device adapted to engage preforms made of a thermoplastic material so as to support, orient, and transport them during the several stages through which the preforms must pass for a further processing in order to obtain the end product, in particular during the thermal conditioning and blowing steps.

Documents US2004/047940A1, US2010/314348A1, US2005/092892A1 DE202012/004015U1 and DE102007/033621A1 describe gripping devices and preforms according to the prior art.

### Background art

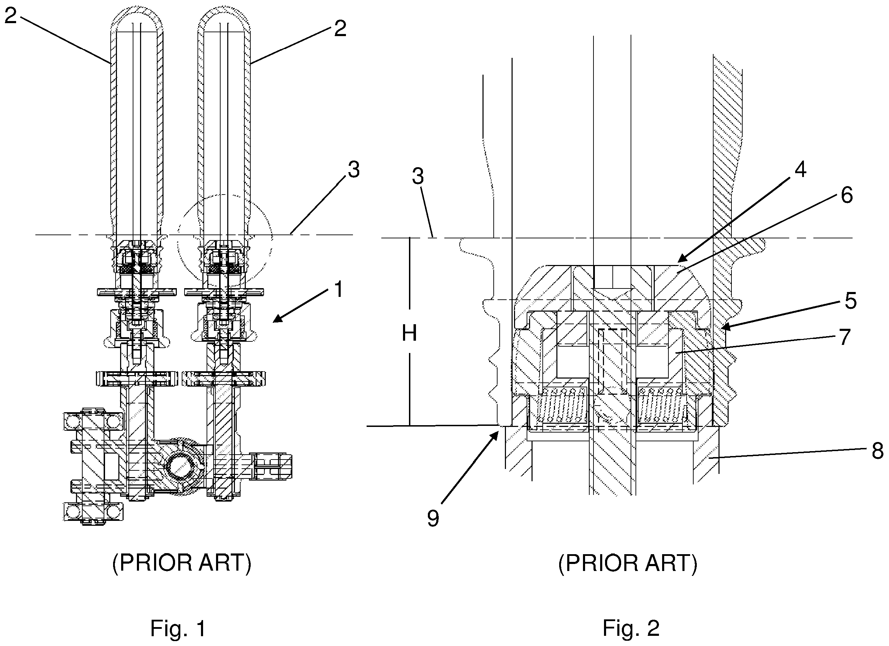

In a plant for manufacturing bottles made of a thermoplastic material, e.g., PET, the preforms are converted into the end product in suitable blowing machines by means of a blowing process. Before they can be processed in these blowing machines, which are well known from the prior art, the preforms are conveyed into the heating oven by means of so-called chucks secured along a transport chain. A chuck serves the function of engaging a respective preform by inserting it into the preform neck, so that it can be then supported when conveyed to the various processing stations; finally, it is released at the end of an operation cycle, being drawn therefrom. The chuck holds and supports the preform, in particular the neck thereof, this being the only portion which is kept cold inside the oven during the heating step. The grip must be sufficient to allow the preform to be spatially moved, without a release thereof due to the stresses to which the preform is typically subjected when moved. For the various units of a plant for manufacturing plastic bottles, the reference plane for the various operations is typically represented by the so-called "zero neck ring" plane, i.e., the plane corresponding to the base plane of an outer neck ring surrounding the preform. The preform loading star, the oven wheel, the chain with the chucks, the preform loading star inside the blowing wheel, the moulds, and the bottle discharging star are positioned with respect to this plane. Fig. 1 shows a pair of prior art chucks 1, each supporting a preform 2 respectively, where the chucks 1 are constrained to a conveyor device. The "zero neck ring" plane is here indicated by reference numeral 3. In Fig. 2, the head 4 of a prior art chuck inserted into the neck 5 of a preform 2 is shown in detail. Head 4 consists in turn of a first cap-shaped member 6, representing the end portion of the chuck, and of a second cylindrical member 7, which serves to block the preform in the support position. The part of the chuck 1 where head 4 is inserted consists of a tubular cylindrical part 8 having an outer diameter which is slightly larger than the inner diameter of the preform neck 5, and thus also of the blocking member 7, so as to define a step 9 at the height of the zone where head 4 is inserted. The so-formed step 9 is adapted to abut against the mouth of neck 5 defining the opening of preform 2. Thereby, for all the preforms which have a neck of the same predetermined length H, a constant distance H can be defined between the "zero neck ring" plane 3 and the neck/chuck abutment 9. When the format of the preform neck is changed, the chuck needs to be changed as well, due to two reasons: either because the neck diameter is changed, or because the neck height is changed; cases are frequent where the chuck needs to be replaced just because the height of the neck, but not its diameter, has changed. It is apparent that with the system described, whether the length of the preform neck should change, i.e., when bottles of a different format are to be produced, and if the same chuck were used, the reference "zero neck ring" plane 3 would also change, leading to adverse effects on the entire process chain. Therefore, replacing all the chucks of a production chain with other chucks suitable to the size of the new neck would be required. The number of chucks in a high-throughput bottle manufacturing plant may also exceed 500 units, whereby the replacement of the chucks, which is necessary due to the change of the preform neck, may require dead times of up to several hours. Therefore, based on the above considerations, the need is felt to manufacture chucks which are capable of minimizing or eliminating these drawbacks, providing chucks which are suitable to interact with preforms having necks with a different height.

### Summary of the invention

It is the main object of the present invention to manufacture a chuck which can be used for different preform formats, in particular for preforms having a neck with a different length from format to format. This chuck does not need to be replaced whenever a change in the preform format occurs, i.e., whenever switching from manufacturing bottles having a neck with a determined length to manufacturing bottles having a neck with a different length is required.

Such an object is achieved by a system according to claim 1.

The gripping device according to the invention may thus be used with preforms having necks with a different length when these necks have, in turn, a step obtained therein, which may abut against the step obtained on the outer surface of the body of the chuck, i.e., of the gripping device, such a step being located, for each preform, always at the same distance from the neck ring base. Thereby, the relative position between the "zero neck ring" plane and the chuck will be always the same for each preform, irrespective of the neck length.

The end portion of the body of the chuck can be integral with the chuck itself, or it can be an end member, e.g. a cap, which is removable from the rest of the body of the chuck.

It is a further object of the present invention to provide a preform adapted to be gripped by a device according to the invention, said preform having a neck with a circumferential step therein, which acts as a reference position for the device in terms of gripping position, when said preform step abuts against the step of the device according to the invention.

Therefore, the present invention also provides a preform having a neck configured for the axial insertion of a gripping device, according to the present invention, wherein in an inner surface of the neck, a circumferential step is provided, which has a shape complementary to said step of the gripping device, adapted to form the only end abutment position against the gripping device during the insertion.

It is apparent that such a chuck can also be used for gripping blow-molded bottles or for other types of container, where necessary.

By virtue of the features of the invention, the continuity of the manufacture of bottles is ensured even in the case of a change of preforms having a different neck length, thus obtaining higher manufacturing yields.

### Brief description of the drawings

Further features and advantages of the invention will become more apparent in light of a detailed description of a preferred, but not exclusive, embodiment of a chuck according to the invention, shown by way of illustrative, non-limiting example, with the aid of the accompanying drawings, in which:
Fig. 1 shows the section of a pair of prior art chucks, each being in the gripping position of a preform.
Fig. 2 shows the section of an enlarged detail of a chuck in Fig. 1.
Figs. 3a, 3b, 3c show sectional views of a chuck of the invention in a gripping position with preforms having different neck heights.
Fig. 4 shows a detail of the inner neck/chuck abutment in Fig. 3b.
Fig. 5 shows an exploded perspective view of a preform blocking system.

### Detailed description of preferred embodiments of the invention

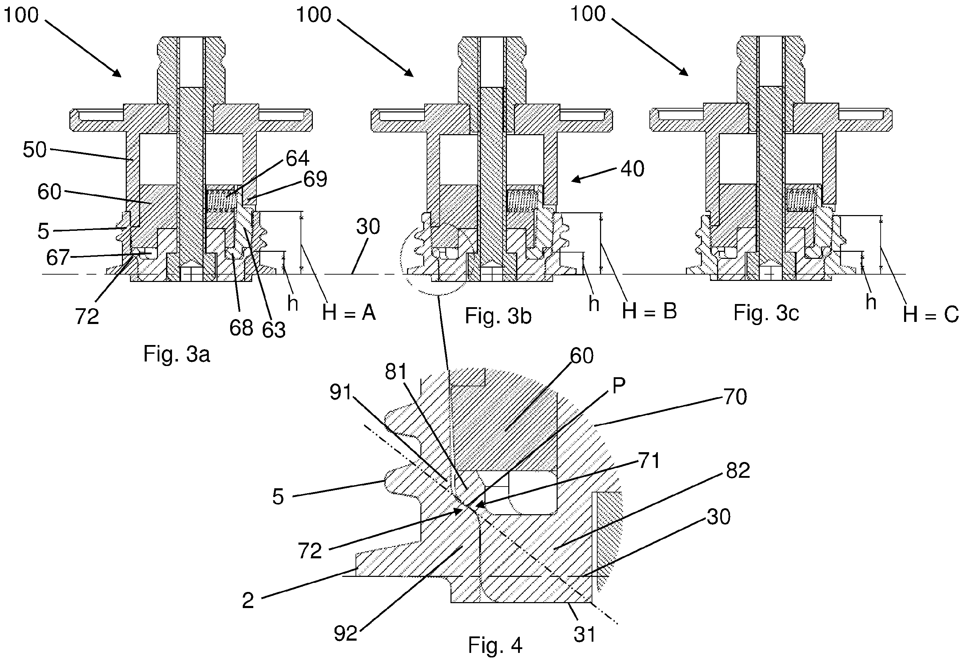

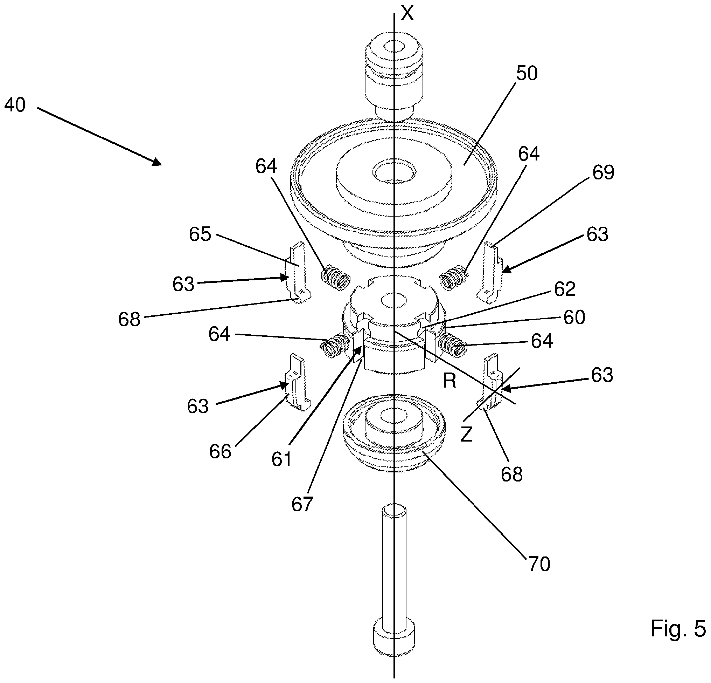

Figs. 3a, 3b, 3c and 4 show a solution provided by the present invention in order to obviate the drawback of having to change the chucks when preforms of different neck height are used while keeping the diameter constant. The idea underlying the present invention is to provide a chuck 100 having a shaped portion so that the neck/chuck abutment zone remains inside the preform neck, conveniently shaped in a complementary fashion with respect to the shaped portion of the chuck, thus keeping the distance between such an abutment and the "zero neck ring" 30 constant, even when the format of the preform neck is changed. Thereby, such a distance is made independent from the length of the preform neck. Figs. 3a, 3b, 3c, and 4 show such a chuck 100. The chuck 100 described in these figures is a particular type of chuck according to the invention, but it is apparent that the arrangement in which the neck/chuck abutment is inside the preform neck and always at the same distance from the zero neck ring may be applied to any type of chuck, for example a chuck provided with blocking means other than those shown. In Figs. 3a, 3b, 3c, a chuck 100 according to the present invention is shown while blocking preform necks with different heights. It is worth noting that, while the length H of the neck can vary according to the preforms, the distance h, i.e., the distance between the abutment and the zero neck ring, advantageously remains constant, even when using preforms with a different neck height H. As it can be seen from the figures, the chuck 100 ends, in its portion facing preform 2, with a body 40 adapted to be inserted into the neck of the preform and to block it. As it will be further described below, the end member 70 of body 40 has two zones 81, 82 with two different outer diameters, thus forming a peripheral, i.e., circumferential, step 71 in their interconnection zone, or transition zone. In particular, the first zone 81, which is outermost to the preform, i.e., proximal to the mouth when it is gripping the preform, has a diameter larger than that of the second zone 82, which is innermost to the preform, i.e., distal from the mouth, when it is in the gripping condition. The end member 70 also has a transition zone between the first zone 81 and the second zone 82, which comprises step 71. Preferably, but not exclusively, the first zone 81 and the second zone 82 have their respective axial length, substantially along axis X. Preferably, but not exclusively, the axial length of the second zone is larger than the axial length of the first zone. Preferably, but not exclusively, the first zone has a further interconnection zone with its end being distal to the second zone, such an end having a diameter smaller than the portion of the first zone which is proximal to the second zone. Preferably, but not exclusively, in said transition zone there is a change in concavity of the outer wall of the end member 70, hence an inflection point P, or flex, is present. Preferably, but not exclusively, the first zone 81 tapers towards the second zone 82, and/or the second zone 82 tapers in the same direction, i.e., towards the inside of the preform. It is worth noting that an inflection point refers to the figures showing sectional views. Fig. 5 shows an exploded perspective view of body 40 according to an embodiment, with the preform blocking system. Body 40, provided with a central axis X, consists of three members, an upper member 50, which can be tapered, a central member 60, and a cap-shaped end member 70; the cap 70 is the innermost portion with respect to the preform when the chuck is inserted therein. The central member 60, which can be tapered, is provided with a plurality of cavities 61 in the form of longitudinal grooves parallel to the central axis X. The cavities 61 have an inner wall 62 and an opening on the cylindrical surface. A gripping member 63 and an elastic means 64, interposed between the inner wall 62 and the gripping member 63, are included inside each cavity 61. The gripping members 63 have an inner side 65 facing the inner wall of cavity 61, and an opposite side 66 facing outwards; the outer side 66 projects beyond the cylindrical surface of the central member 60. According to the present embodiment, the elastic means 64 consist of springs, which act between the inner wall 62 of the respective cavity 61 and the corresponding inner side 65 of the respective gripping member 63. In each of the cavities 61, a niche 67 is also included, adapted to receive an end leg 68 of a respective gripping member 63. The gripping member 63 is held by the end leg 68 inside niche 67, but it freely swivels about an axis Z passing through such an end leg 68; axis Z is perpendicular to both the longitudinal axis X of the chuck 100, and to a radial axis R passing through the center of niche 67 and through the longitudinal axis X of the chuck. Thereby, the end leg 68 defines the fulcrum of the gripping member 63. Spring 64 acts on the inner side 65 of the gripping member 63, namely on the free end 69 located on the opposite side with respect to the end leg 68. The gripping member 63 can thus swivel about the axis Z passing through the end leg 68, and thereby, being pushed by spring 64, it is pressed with the outer side 66 against the inner surface of the neck 5 of preform 2, thus blocking it. The outer side 66 of the gripping member 63 is slightly curved to promote the insertion of the chuck into the neck 5 of preform 2. This arrangement promotes the insertion and release of the chuck from the preform neck 5, and also allows the same chuck to be used with preforms having necks with a slightly different diameter. With reference to Figs. 3 and 4, as described above, it can be noted that the cap 70 of body 40 has a first zone 81 with a first diameter, and a second end zone with a second diameter smaller than the first diameter, so as to form the circumferential step 71. In particular, the step is comprised in a transition zone between the first zone 81 and the second zone 82. When inserting the chuck 100 into the neck 5 of preform 2, step 71 abuts against a corresponding step 72, shaped so as to be substantially complementary to step 71. Preferably, the abutment between step 71 and step 72 is the only abutment in the axial direction between the gripping device and the preform. Step 72 is formed on the cylindrical inner surface of the neck 5 of preform 2. Step 72 inside the bottle neck 5 is formed by the transition of the inner wall of neck 5 between a first part 91 having a first diameter and a second part 92 with a second diameter smaller than the first one; the first part 91 extends from the mouth of neck 5 up to step 72, and the second part extends from this step 72 up to the neck ring base, defining the "zero neck ring" plane 30 of the preform. The first diameter of the neck 5 of preform 2 is sufficient to allow the part of the body 40 of the chuck 100 having the largest diameter to be inserted into the bottle neck. Preferably, but not exclusively, step 72 is comprised in a transition zone between the first zone 91 and the second zone 92. Preferably, in said transition zone there is a change in concavity of the inner wall of the neck, therefore an inflection point, or flex, is present. The first zone 81, the second zone 82, and the transition zone of the gripping device are preferably all shaped so that their shape is complementary to the first zone 91, the second zone 92, and the transition zone of the preform, respectively. In Fig. 4, from the mouth to the neck ring, the transition zone of the inner wall of neck 5 has a concave curvature, followed by a convex curvature with equal curvature radiuses. The transition zone of the gripping device has a complementary shape. It is apparent that the zone of step 72 inside the neck 5 of preform 2 and the corresponding zone of the step 71 of body 40, i.e., the cap 70, can be obtained with profiles of a different type from that described, which is provided by way of example only. For any neck 5, irrespective of its length H, the zone of step 72 will always be located in the same position with respect to the zero neck ring, i.e., at the same distance h therefrom (Fig. 3). The position of the zone of step 72 in the preform neck is obviously determined by the position of step 71 on the outer surface of the cap 70 of the body 40 of the chuck 100. The distance of step 71 from surface 31 (Fig. 4), corresponding to the outer surface of cap 70 perpendicular to axis X and also defining the end of the chuck 100 on the side facing the inside of preform 2, is preferably dimensioned based on the position required for the gripping members 63 to grip the inner surface of the neck; furthermore, such a distance of step 71 from surface 31 is dimensioned by considering that the end portion of the chuck 100 should be prevented from penetrating the part of preform 2 which is subjected to heating inside the oven; in other words, step 71 is positioned by making sure that surface 31 not to exceed the part of the preform to be heated. Therefore, step 72 is preferably positioned around a position corresponding to the zone of the chuck 100 where the end leg 68 of the gripping member 63 i.e., of niche 67, is located. In the example shown in Fig. 3a, the zone of step 72 on the preform neck is at about 4 mm from the neck ring base defining the so-called "zero neck ring" plane 30, i.e., as described, in the zone defining the fulcrum of the gripping member 63. Figs. 3a, 3b, 3c show the chuck 100 according to the invention under three different conditions, corresponding to three different lengths H of the neck. As it can be seen from these figures, even if the length H of the preform neck changes, in the example from a length of A, B, and C in Figs. 3a, 3b, 3c, respectively, with A>B>C, the position of the chuck with respect to the "zero neck ring" plane, i.e., the height h, remains unchanged. In the embodiment described, step 71 was obtained by modifying the cap 70 of the chuck 100, with the advantage that the chucks having this end member can thus be adapted to the present invention by modifying only this part. This particular embodiment of the chuck in accordance with the invention has been described by way of example only, the chucks being also made with another shape encompassed in the scope of the invention, provided that they have an inner neck/chuck abutment the distance of which from the "zero neck ring" plane is constant, while varying the height of the preform neck. In particular, although the description of the invention has been given for a chuck using gripping members actuatable by spring means, it is apparent that it can also be applied to chucks using different gripping members, such as rubber rings or other elastic expanding means, for example. Solutions using rubber expanding rings inserted into a circumferential groove lead, for example, to the radial expansion of the ring due to an axial narrowing of the circumferential groove or to the inflation of the rubber ring, or to other means of a type known to those skilled in the art, thus producing a frictional contact against the inner wall of the neck of the preform or bottle.

## Claims

1. A system comprising
- a preform (2) having a neck (5) configured for an axial insertion of a gripping device (100) wherein there is provided a circumferential step (72) in an inner surface of the neck (5), said circumferential step (72) being formed by the transition of the inner surface of the neck (5) between a first part (91) having a first diameter and a second part (92) with a second diameter smaller than the first diameter so as to have a shape complementary to said circumferential step (71) of the gripping device (100) and to form the only end abutment position against the gripping device (100) during the axial insertion, wherein the zone of the circumferential step (72) on the preform neck (5) is at about 4 mm from the neck ring base defining the base plane of an outer neck ring surrounding the preform, and wherein the first part (91) extends from the mouth of the neck (5) up to the circumferential step (72), and the second part (92) extends from said circumferential step (72) up to the neck ring base, and
- a gripping device (100) of a preform or container (2) provided with a neck (5), comprising: a body (40) apt to be positioned coaxially inside the neck (5), having an end portion (70), members (63, 64) configured to frictionally engage the inner surface of said neck (5) in order to block said preform or container integrally with the gripping device, **characterized in that** the end portion (70) has a first zone (81) with a first diameter and a second zone (82) with a second diameter smaller than said first diameter, and an interconnection zone therebetween forming a circumferential step (71), configured to abut against a circumferential step (72) inside the neck (5) of the preform (2) and with a shape complementary to said circumferential step (71) of the gripping device (100), so that the gripping device (100) is apt to be inserted into necks with a different length of different preform formats so that plane under the neck ring of the preforms is always located at the same plane, whichever the format is.

2. A system according to claim 1, wherein in said interconnection zone there is a change in concavity of the outer wall of the end portion (70).

3. A system according to any one of the preceding claims, wherein said first zone (81) and said second zone (82) each have their respective axial length.

4. A system according to any one of the preceding claims, wherein said circumferential step (71) is the only portion of the gripping device (100) apt to axially abut against the preform (2) when being inserted into the preform.

5. A system according to any one of the preceding claims, wherein said first zone (81) tapers towards said second zone (82) and said second zone (82) tapers in the same direction towards which said first zone (81) tapers.

6. A system according to any one of the preceding claims, wherein the end portion is a cap (70).

7. A system according to any one of the preceding claims, wherein said cap (70) is reversibly constrained to the body (40).

8. A preform (2) having a neck (5) configured for an axial insertion of a gripping device (100) according to any one of the preceding claims, wherein there is provided a circumferential step (72) in an inner surface of the neck (5), said circumferential step (72) being formed by the transition of the inner surface of the neck (5) between a first part (91) having a first diameter and a second part (92) with a second diameter smaller than the first diameter so as to have a shape complementary to said circumferential step (71) of the gripping device (100) and to form the only end abutment position against the gripping device (100) during the axial insertion,
wherein the zone of the circumferential step (72) on the preform neck (5) is at about 4 mm from the neck ring base defining the base plane of an outer neck ring surrounding the preform,
and wherein the first part (91) extends from the mouth of the neck (5) up to the circumferential step (72), and the second part (92) extends from said circumferential step (72) up to the neck ring base.

## Patentansprüche

1. System, aufweisend:
- eine Vorform (2) mit einem Hals (5), der für das axiale Einführen einer Greifvorrichtung (100) ausgestaltet ist, wobei eine umlaufende Kante (72) an einer Innenfläche des Halses (5) vorgesehen ist und die umlaufende Kante (72) durch den Übergang der Innenfläche des Halses (5) von einem ersten Bereich (91) mit einem ersten Durchmesser zu einem zweiten Bereich (92) mit einem zweiten Durchmesser, der kleiner ist als der erste Durchmesser, gebildet wird, so dass er eine komplementäre Form zu der umlaufenden Kante (71) der Greifvorrichtung (100) hat und beim axialen Einführen das einzige Widerlager für die Endanschlagposition gegenüber der Greifvorrichtung (100) darstellt, wobei der Bereich der umlaufenden Kante (72) am Hals (5) der Vorform etwa 4 mm von der Basis des Halsrings entfernt ist, die die Basisebene eines äußeren Halsrings definiert, der die Vorform umgibt, und wobei sich der erste Bereich (91) von der Mundöffnung des Halses (5) bis zur umlaufenden Kante (72) erstreckt, und sich der zweite Bereich (92) von der umlaufenden Kante (72) bis zur Basis des Halsrings erstreckt, und
- eine Greifvorrichtung (100) für eine Vorform oder einen Behälter (2) der mit einem Hals (5) versehen ist, aufweisend:
einen Korpus (40), der geeignet ist, um koaxial in dem Hals (5) positioniert zu werden, aufweisend ein Endstück (70), Bauteile (63, 64),die derart ausgestaltet sind,
dass sie durch Reibung in die Innenfläche des Halses (5) eingreifen, um die Vorform oder den Behälter formschlüssig an der Greifvorrichtung zu arretieren,
**dadurch gekennzeichnet, dass** das Endstück (70) einen ersten Bereich (81) mit einem ersten Durchmesser und einen zweiten Bereich (82) mit einem zweiten Durchmesser aufweist, der kleiner ist als der erste Durchmesser, sowie einen Kopplungsbereich der zwischen den beiden eine umlaufende Kante (71) bildet, die derart ausgestaltet ist, dass sie gegen eine umlaufende Kante (72) innerhalb des Halses (5) der Vorform (2) stoßen kann und eine komplementäre Form zu der umlaufenden Kante (71) der Greifvorrichtung (100) aufweist, so dass die Greifvorrichtung (100) geeignet ist, in Hälse mit unterschiedlicher Länge von unterschiedlichen Ausführungen von Vorformen eingeführt zu werden, so dass die Ebene unter dem Halsring der Vorformen, egal welcher Ausführung, stets auf der gleichen Ebene liegt.

2. System gemäß Anspruch 1, wobei im Kopplungsbereich eine Änderung der Wölbung der Außenwand des Endstücks (70) vorliegt.

3. System gemäß einem der vorigen Ansprüche, wobei der erste Bereich (81) und der zweite Bereich (82) jeweils ihre entsprechende axiale Länge aufweisen.

4. System gemäß einem der vorigen Ansprüche, wobei die umlaufende Kante (71) der einzige Bereich der Greifvorrichtung (100) ist, der geeignet ist, axial gegen die Vorform (2) zu stoßen, wenn sie in die Vorform eingeführt wird.

5. System gemäß einem der vorigen Ansprüche, wobei sich der erste Bereich (81) zum zweiten Bereich (82) hin verjüngt und der zweite Bereich (82) sich in dieselbe Richtung verjüngt wie der erste Bereich (81).

6. System gemäß einem der vorigen Ansprüche, wobei das Endstück eine Kappe (70) ist.

7. System gemäß einem der vorigen Ansprüche, wobei die Kappe (70) abnehmbar auf den Korpus (40) gepresst ist.

8. Vorform (2) mit einem Hals (5), der gestaltet ist für das axiale Einführen einer Greifvorrichtung (100) gemäß einem der vorigen Ansprüche, wobei eine umlaufende Kante (72) an einer Innenfläche des Halses (5) vorgesehen ist und die umlaufende Kante (72) durch den Übergang der Innenfläche des Halses (5) von einem ersten Bereich (91) mit einem ersten Durchmesser zu einem zweiten Bereich (92) mit einem zweiten Durchmesser, der kleiner ist als der erste Durchmesser, gebildet wird, so dass er eine komplementäre Form zu der umlaufenden Kante (71) der Greifvorrichtung (100) hat und beim axialen Einführen das einzige Widerlager für die Endanschlagposition gegenüber der Greifvorrichtung darstellt, wobei der Bereich der umlaufenden Kante (72) am Hals (5) der Vorform etwa 4 mm von der Basis des Halsrings entfernt ist, die die Basisebene eines äußeren Halsrings definiert, der die Vorform umgibt, und wobei sich der erste Bereich (91) von der Mundöffnung des Halses (5) bis zur umlaufenden Kante (72) erstreckt, und sich der zweite Bereich (92) von der umlaufenden Kante (72) bis zur Basis des Halsrings erstreckt.

## Revendications

1. Un système comprenant
- une préforme (2) ayant un col (5) configuré pour une insertion axiale d'un dispositif (100) de préhension où est fourni un redan (72) circonférentiel sur la surface interne du col (5), ledit redan (72) circonférentiel étant formé par la transition de la surface interne du col (5) entre la première partie (91) ayant un premier diamètre et la seconde partie (92) avec un second diamètre plus petit que le premier diamètre de façon à avoir une forme complémentaire audit redan (71) circonférentiel du dispositif (100) de préhension et pour former la seule position de butée limite contre le dispositif (100) de préhension pendant l'insertion axiale, où la zone du redan (72) circonférentiel sur le col (5) de la préforme se trouve à environ 4 mm de la base de l'anneau de col définissant le plan de base d'un anneau de col extérieur entourant la préforme et où la première partie (91) s'étend de l'embouchure du col (5) jusqu'au redan (72) circonférentiel et la seconde partie (92) s'étend depuis ledit redan (72) circonférentiel jusqu'à la base de l'anneau de col, et
- un dispositif (100) de préhension d'une préforme ou récipient (2) fourni avec un col (5) comprenant : un corps (40) apte à être positionné de manière coaxiale à l'intérieur du col (5), ayant une partie (70) terminale, des membres (63, 64) configurés pour engager par friction la surface interne dudit col (5) afin de bloquer intégralement ladite préforme ou récipient avec le dispositif de préhension, **caractérisé en ce que** la partie (70) terminale possède une première zone (81) avec un premier diamètre et une seconde zone (82) avec un second diamètre plus petit que ledit premier diamètre et une zone d'interconnexion entre les deux formant un redan (71) circonférentiel, configuré pour buter contre un redan (72) circonférentiel à l'intérieur du col (5) de la préforme (2) et avec une forme complémentaire à celle dudit redan (71) circonférentiel du dispositif (100) de préhension, de façon que le dispositif de préhension (100) puisse être inséré dans les cols avec une longueur différente de différents formats de préforme de façon que le plan sous l'anneau du col des préformes soit toujours situé sur le même plan, quel que soit le format.

2. Un système selon la revendication 1, où dans ladite zone d'interconnexion il y a un changement dans la concavité de la paroi extérieure de la partie (70) terminale.

3. Un système selon n'importe laquelle des revendications précédentes, où ladite première zone (81) et ladite seconde zone (82) ont chacune leur longueur axiale respective.

4. Un système selon n'importe laquelle des revendications précédentes, où ledit redan (71) circonférentiel est la seule partie du dispositif (100) de préhension apte à buter axialement contre la préforme (2) lorsqu'il est inséré dans la préforme.

5. Un système selon n'importe laquelle des revendications précédentes, où ladite première zone (81) devient plus étroite vers la seconde zone (82) et ladite seconde zone (82) devient plus étroite dans la même direction vers laquelle ladite première zone (81) devient plus étroite.

6. Un système selon n'importe laquelle des revendications précédentes, où la partie terminale est une capsule (70).

7. Un système selon n'importe laquelle des revendications précédentes, où ladite capsule (70) est forcée sur le corps (40) de manière réversible.

8. Une préforme (2) ayant un col (5) configuré pour une insertion axiale d'un dispositif (100) de préhension selon n'importe laquelle des revendications précédentes, où dans laquelle est fourni un redan (72) circonférentiel sur une surface interne du col (5), ledit redan (72) circonférentiel étant formé par la transition de la surface interne du col (5) entre la première partie (91) ayant un premier diamètre et une seconde partie (92) avec un second diamètre plus petit que le premier diamètre de façon à avoir une forme complémentaire audit redan (71) circonférentiel du dispositif (100) pendant l'insertion axiale,
où la zone du redan (72) circonférentiel sur le col (5) de la préforme se trouve à environ 4 mm de la base de l'anneau de col définissant le plan de base d'un anneau de col extérieur entourant la préforme
et où la première partie (91) s'étend à partir de l'embouchure du col (5) jusqu'au redan (72) et la seconde partie (92) s'étend depuis ledit redan (72) circonférentiel jusqu'à la base de l'anneau de col.
